# EUROPEAN PATENT SPECIFICATION

(11) **EP 0 540 481 B1**
(45) Date of publication and mention of the grant of the patent: **06.12.1995**
(21) Application number: 92830535.8
(22) Date of filing: 29.09.1992
(51) Int. Cl.: A47C 7/46

(54) **A back-rest for seats, particularly motor-vehicle seats**
Rückenlehne für Sitze, insbesondere Kraftfahrzeugsitze
Dossier pour sièges, notamment sièges de véhicules automobiles

(30) Priority: 31.10.1991 IT TO910831
(43) Date of publication of application: 05.05.1993
(73) Proprietor: FIAT AUTO S.p.A., 10135 Torino (IT)
(72) Inventor: Dal Monte, Antonio, I-00196 Roma (IT)
(74) Representative: Bosotti, Luciano

(56) References cited:
- EP-A- 0 296 938
- EP-A- 0 420 824
- FR-A- 2 087 510

## Description

The present invention relates generally to back-rests for seats and has been developed with particular concern for its possible application to motor-vehicle seats.

From this point of view, the present invention constitutes a further development of the solutions described in European Patent Applications EP - A - 0420824 and 92830283.5 , both in the name of the same Applicant.

The applications in question describe a seat, particularly a motor vehicle seat, which has a member with a generally butterfly or hourglass configuration in a position for supporting the lumbar portion of the back of the seat occupant, the member preferably consisting of two complementary parts of rigid material which can be relatively oriented (by control or automatically) about a vertical hinge axis with the consequent variation in the vertical profile of the back-rest so as to achieve a better adaptation to the anthropometric characteristics and/or tastes and habits of the seat occupant.

The object of the present invention is to provide a generally forward-rearward adjusting movement relative to the seat for a support member of the type described above. The whole by means of an intrinsically simple, inexpensive structure which is essentially interchangeable with the solutions described in the patent documents mentioned above.

According to the present invention, this object is achieved by means of a back-rest having the characteristics claimed specifically in the claims which follow.

The invention will now be described, purely by way of non-limiting example, with reference to the appended drawings, in which:
Figure 1 is a schematic vertical elevational view of the back-rest of a seat in accordance with the invention from the rear, with several parts not illustrated for clarity of presentation,
Figure 2 is an imaginary view from above taken on the line II-II of figure 1, and
Figure 3 illustrates the group of elements indicated by the arrow III in Figure 2 in greater detail.

In the drawings, a lumbar support member generally indicated 1 is intended to be located in a generally horizontal position within the structure of a back-rest of a seat such as a motor-vehicle seat. Of this back-rest, not illustrated in its entirety, there are shown only two intermediate portions of the side pillars 2 of the portal structure or framework of the back-rest itself. The pillars 2 usually extend substantially vertically. For a more complete and detailed description of this back-rest structure, reference should be made to the specification of the documents mentioned above, particularly to the specification of EP - A - 0420824.

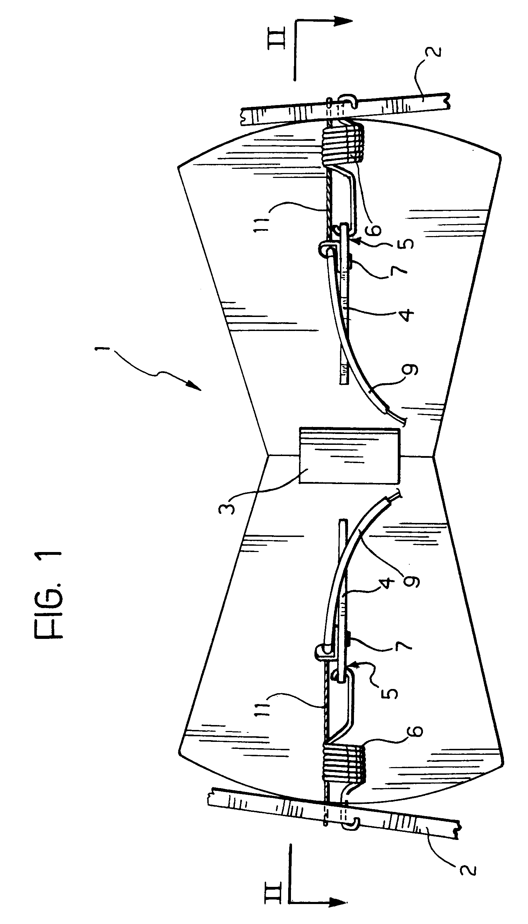

As is best seen in Figure 1, the member 1 has a generally butterfly or hourglass configuration being constituted essentially by an arcuate band with its concavity facing forwardly, the band having a minimum depth at its centre and gradually increasing in a generally symmetrical and mirror-imaged arrangement towards its outer ends facing the two vertical pillars 2.

The member 1 is usually constituted by a shell structure of rigid material such as a moulded plastics material. The member 1 may be made as a unitary piece and/or comprise two complementary parts which are symmetrical to each other and possibly connected at their mutually-facing inner ends by a connecting member 3 which extends between the inner ends of the two parts constituting the member 1.

In any case, the constructional details of the member 1 (made in a single piece or in two complementary parts, these latter being connected with or without the possibility of relative orientation) are not in themselves relevant for the purposes of carrying out the present invention.

It should also be stated that the terms vertical, front, rear, upper, lower, etc as used in the present description, and - if used - in the claims which follow, should be understood with reference to the normal disposition of use of the seat and to the normal direction of movement of the vehicle in which it is mounted.

Starting from the rear ends of the two complementary parts or halves into which the member 1 is (imaginarily or in fact) divided, two brackets 4 extend in a generally median position relative to the vertical development of the member 1 itself. Each bracket 4 has an aperture 5 at its free end in which is inserted one of the ends of the spring 6 which connects the respective half of the member 1 to the pillar 2 which this part faces.

Usually both the end of each spring 6 which is engaged in the aperture 5 and the opposite end are generally hook shaped.

On each bracket 4 there is mounted, for example by a rivet 7 which passes through a corresponding aperture in the bracket 4, an L-shaped formation 8 which constitutes a reaction and anchorage element for one of the ends of the sheath 9 of a respective flexible cable control (so called "bowden" cable) 10. The movable element or cable proper 11 of the control 10 passes through a hole in the L-shaped formation 8 so as to come to bear against the pillar 2 closest to it. Preferably the cable 11 extends over the front edge of the pillar 2 in a generally hook-like formation with its retaining terminal element 12 (which is generally ball or olive shaped) anchored in a corresponding aperture 12a in the outer face of the pillar 2 (which usually has an C-section with the base wall part in which the terminal 12 is anchored facing outwardly).

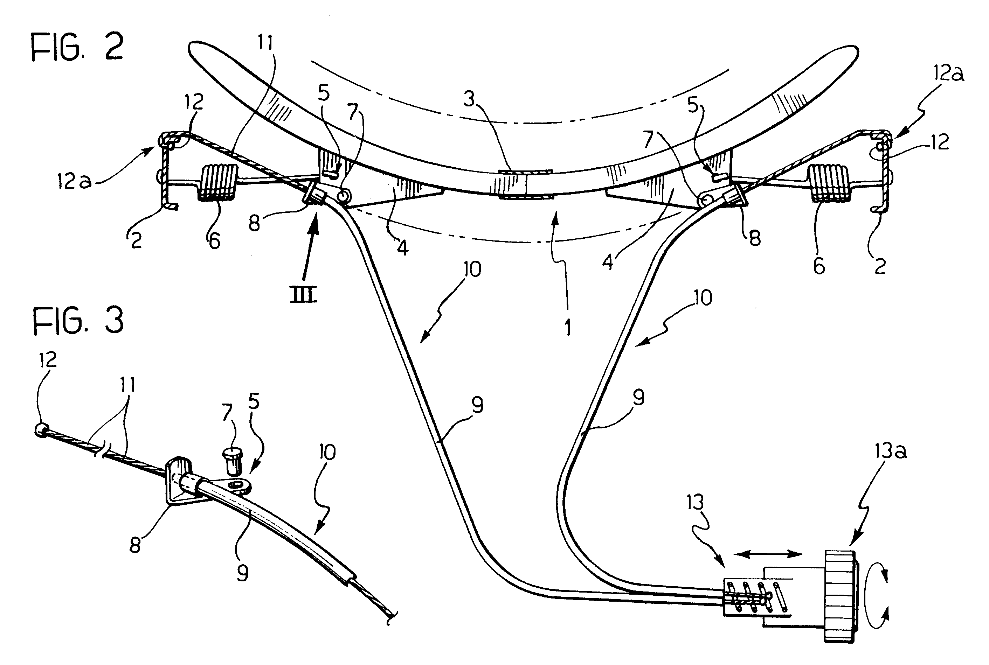

There is thus a respective flexible control cable 10 for each of the two halves of the member 1 arranged in a generally symmetrical configuration. The two controls 10 come together (in a kinetically symmetrical manner) in a common control unit 13 constituted by a traction member (of known type) intended to move the cables 11 of the control 10 within their sheaths 9. The control member 13, of well known type, may be operated manually as shown schematically in Figure 2. In this drawing, reference 13a shows a hand grip or knob mounted on one side of the seat in a position in which it can easily be reached by the seat occupant, and which may be rotated to operate the flexible control cables 10 (in a symmetrical manner). Alternatively the control may be motor driven with the cables 11 driven, for example, by an electric motor.

The actuation of the control 12, and hence the longitudinal movement of the cable 11 of each control 10 within its respective sheath 9, has the effect of varying selectively (in a generally symmetrical disposition for the two halves of the member 1) the length of the free portion of cable 11 between the L-shaped element 8 (hence between the bracket part 4) and the corresponding pillar 2. The effect of this variation in length is to vary the relative position of the member 1 and the pillars 2 (also in a generally symmetrical situation within the back rest). More precisely, this variation corresponds to a change in the location of the member 1 in a forward-rearward sense relative to the framework or skeleton of the back-rest.

In other words, by operating the control 13, the seat occupant is able, according to his needs and his tastes, to move the element 1 forwardly or rearwardly, in a generally horizontal direction relative to the back-rest (chain line and double-dotted chain line in Figure 2). From the above, it is seen that the system described above for moving the lumbar support member has a fairly simple structure which is easy to construct and relatively inexpensive.

More particularly, the drive system can easily be made with the use of parts common to the solutions described in the prior European applications EP - A 0420824 and EP - A 0508964.

The solution of the invention is further characterised in the absence of drive or anchoring members (for example the terminal stop members 12 for the flexible control cables) in positions projecting from the back-rest, whether from its outer side faces or, above all, from its rear face, in a position which could be irritating for the knees of passengers seated on the rear seat of a motor vehicle.

Naturally, the principle of the invention remaining the same, the constructional details and forms of embodiment may be varied widely with respect to that described and illustrated without thereby departing from the scope of the present invention as claimed in the appending claims.

## Claims

1. A seat back-rest including a supporting framework with two side pillars (2), a support member (1) having a generally horizontal development for the back of the seat occupant, and support elements (6) extending so as to interconnect the pillars (2) and the support member (1) in a substantially symmetrical arrangement with respect to the median vertical plane through the back-rest, characterised in that it includes adjustment means (9 to11) also extending in a substantially symmetrical arrangement with respect to the vertical median plane through the back-rest between the support member (1) and a respective one of the side pillars (2); the adjustment means having parts (11) connecting the support member (1) to respective ones of the pillars (2) whose lengths are selectively variable (12,13); the variation in the length of the active parts (11) causing a corresponding variation in the forward-rearward position of the support member (1) relative to the side pillars (2) of the back-rest.

2. A back-rest according to Claim 1, characterised in that the support member (1) has a generally butterfly or hourglass configuration.

3. A back-rest according to Claim 1 or Claim 2, characterised in that the support member (1) includes two parts which are substantially symmetrical to each other about the vertical median plane of the back-rest itself.

4. A back-rest according to any one of Claims (1 to3) characterised in that the support member (1) has bracket formations (4) at the back on which bear the connecting elements (6) and the adjustment means (9-11).

5. A back-rest according to any one of the preceding Claims, characterised in that the connecting elements (6) are constituted by resilient bodies such as springs (6).

6. A back-rest according to any one of the preceding Claims, characterised in that the adjustment means are constituted by flexible cable controls (10) comprising a sheath (9) and a cable (11), the sheath (9) bearing against the support member (1) and the cable (11) having an active part of selectively variable length extending between the support member (1) and a respective one of the pillars (2).

7. A back-rest according to Claim 6, characterised in that the cable (11) of each said flexible cable control (10) is hooked on to the respective pillar (2) by a terminal formation (12) constituted by an approximately spherical body inserted in an aperture (12a) in the side pillar (2).

8. A back-rest according to Claim 7 , characterised in that the terminal formation (12) is located in a position which is generally concealed by the pillar (2) itself.

9. A back-rest according to any one of Claims 6 to 8, characterised in that each side pillar (2) has a generally C-shaped profile with a base wall facing outwardly of the back-rest, and in that the flexible cable controls (10) have their cables (11) anchored to the base wall of the respective side pillar (2).

10. A back-rest according to any one of Claims 6 to 9, characterised in that the end portions of the flexible cable controls (10) are arranged so that they are generally wrapped around the respective one of the side pillars (2), the path of wrapping extending over the front side of the respective pillar (2).

11. A back-rest according to any one of the preceding Claims, characterised in that, to provide for the attachment and reaction of the adjustment means (9-11), the support member (1) has rear bracket formations (4) on which there are mounted generally L-shaped formations (8) with at least one aperture (11) for the passage of the adjustment means.

## Patentansprüche

1. Sitzrückenlehne umfassend einen Stützrahmen mit zwei Seitenstehern (2), einem Stützelement (1) mit einer im wesentlichen horizontalen Ausbreitung für den Rücken des Sitzbenützers, und Tragelemente (6), die sich so erstrecken, daß sie die Steher (2) und das Stützelement (1) in im wesentlichen symmetrischer Anordnung in bezug auf die mittlere vertikale Ebene durch die Rückenlehne miteinander verbinden, dadurch gekennzeichnet, daß sie Verstellmittel (9-11) aufweist, die sich auch in im wesentlichen symmetrischer Anordnung in bezug auf die vertikale mittlere Ebene durch die Rückenlehne zwischen dem Stützelement (1) und einem entsprechenden Steher (2) erstrecken; wobei die Verstellmittel Teile (11) aufweisen, die das Stützelement (1) mit einem entsprechenden Steher (2) verbinden und deren Längen (12, 13) wahlweise verstellt werden können; wobei die Veränderung der Länge der aktiven Teile (11) eine entsprechende Veränderung der Vorwärts-Rückwärts-Stellung des Stützelementes (1) relativ zu den Seitenstehern (2) der Rückenlehne bewirken.

2. Rückenlehne nach Anspruch 1, dadurch gekennzeichnet, daß das Stützelement (1) im allgemeinen die Form eines Schmetterlinges oder eines Stundenglases hat.

3. Rückenlehne nach Anspruch 1 oder 2, dadurch gekennzeichnet, daß das Stützelement (1) zwei Teile aufweist, die im wesentlichen symmetrisch zueinander in bezug auf die vertikale mittlere Ebene der Rückenlehne sind.

4. Rückenlehne nach einem der Ansprüche 1 bis 3, dadurch gekennzeichnet, daß das Stützelement (1) klammerartige Elemente (4) aufweist, an deren Rückseite die Verbindungselemente (6) und die Verstellmittel (9-11) aufliegen.

5. Rückenlehne nach einem der vorhergehenden Ansprüche, dadurch gekennzeichnet, daß die Verbindungselemente (6) von elastischen Körpern, wie z.B. Federn (6), gebildet sind.

6. Rückenlehne nach einem der vorhergehenden Ansprüche, dadurch gekennzeichnet, daß die Verstellmittel von biegbaren Seilzügen (10) gebildet sind, umfassend eine Hülle (9) und ein Seil (11), wobei die Hülle (9) sich am Stützelement (1) abstützt und das Seil (11) einen aktiven Teil mit wahlweise verstellbarer Länge aufweist, der sich zwischen dem Stützelement (1) und einem entsprechenden Steher (2) erstreckt.

7. Rückenlehne nach Anspruch 6, dadurch gekennzeichnet, daß das Seil (11) jedes biegbaren Seilzuges (10) am jeweiligen Steher (2) mit Hilfe eines Endelementes (12) festgehakt ist, welches von einem im wesentlichen kugelförmigen, in eine Öffnung (12a) im Seitensteher (2) eingesetzten Körper gebildet ist.

8. Rückenlehne nach Anspruch 7, dadurch gekennzeichnet, daß das Endelement (12) an einer Stelle angeordnet ist, die im allgemeinen durch den Steher (2) selbst verdeckt ist.

9. Rückenlehne nach einem der Ansprüche 6 bis 8, dadurch gekennzeichnet, daß jeder Seitensteher (2) ein im allgemeinen C-förmiges Profil hat, dessen Unterteil von der Rückenlehne nach außen gerichtet ist, und daß die biegbaren Seilzüge (10) mit ihren Seilen (11) am Unterteil des entsprechenden Seitenstehers (2) verankert sind.

10. Rückenlehne nach einem der Ansprüche 6 bis 9, dadurch gekennzeichnet, daß die Endabschnitte der biegbaren Seilzüge (10) so angeordnet sind, daß sie im allgemeinen um den entsprechenden Seitensteher (2) herum geführt sind, wobei sie über die Vorderseite des entsprechenden Stehers (2) verlaufen.

11. Rückenlehne nach einem der vorhergehenden Ansprüche, dadurch gekennzeichnet, daß zum Zwecke der Befestigung und Wirkung der Verstellmittel (9-11) das Stützelement (1) hintere klammerartige Elemente (4) aufweist, auf welchen im allgemeinen L-förmige Elemente (8) mit mindestens einer Öffnung als Durchlaß für die Verstellmittel (11) montiert sind.

## Revendications

1. Dossier de siège comprenant une armature de support possédant deux montants latéraux (2), un élément d'appui (1) ayant un développement généralement horizontal pour le dos de l'occupant du siège, et des éléments (6) d'appui qui s'étendent de manière à interconnecter les montants (2) et l'élément d'appui (1) dans un arrangement sensiblement symétrique par rapport au plan vertical médian traversant le dossier, caractérisé en ce qu'il comprend des moyens de réglage (9 à 11) s'étendant eux aussi dans un arrangement sensiblement symétrique par rapport au plan médian vertical traversant le dossier entre l'élément d'appui (1) et l'un, respectif, des montants latéraux (2) ; les moyens de réglage ayant des parties (11) qui relient l'élément d'appui (1) aux montants respectifs (2), dont les longueurs sont sélectivement variables (12, 13) ; la variation de la longueur des parties actives (11) provoquant une variation correspondante de la position avant-arrière de l'élément d'appui (1) par rapport aux montants latéraux (2) du dossier.

2. Dossier selon la revendication 1, caractérisé en ce que l'élément d'appui (1) a la configuration générale d'un papillon ou d'un sablier.

3. Dossier selon la revendication 1 ou 2, caractérisé en ce que l'élément d'appui (1) comprend deux parties qui sont sensiblement symétriques l'une de l'autre de part et d'autre d'un plan médian vertical du dossier lui-même.

4. Dossier selon une quelconque des revendications (1 à 3), caractérisé en ce que l'élément d'appui (1) présente à l'arrière des formations (4) du type ferrure, qui portent les éléments de liaison (6) et les moyens de réglage (9-11).

5. Dossier selon une quelconque des revendications précédentes, caractérisé en ce que les éléments de liaison (6) sont constitués par des corps élastiques tels que des ressorts (6).

6. Dossier selon une quelconque des revendications précédentes, caractérisé en ce que les moyens de réglage sont constitués par des commandes (10) à câble flexible, comprenant une gaine (9) et un câble (11), la gaine (9) portant contre l'élément d'appui (1) et le câble (11) ayant une partie active de longueur sélectivement variable qui s'étend entre l'élément d'appui (1) et l'un, respectif, des montants (2).

7. Dossier selon la revendication 6, caractérisé en ce que le câble (11) de chacune desdites commandes (10) à câble flexible est accroché sur le montant (2) respectif par une formation terminale (12) constituée par un corps approximativement sphérique inséré dans un trou (12a) du montant latéral (2).

8. Dossier selon la revendication 7, caractérisé en ce que la formation terminale (12) est placée dans une position qui est généralement dissimulée par le montant (2) lui-même.

9. Dossier selon une quelconque des revendications 6 à 8, caractérisé en ce que chaque montant latéral (2) a un profil ayant la forme générale d'un C, avec une paroi de base qui fait face vers l'extérieur du dossier et en ce que les commandes (10) à câble flexible ont leurs câbles (11) ancrés à la paroi de base du montant latéral (2) respectif.

10. Dossier selon une quelconque des revendications 6 à 9, caractérisé en ce que les parties d'extrémité des commandes (10) à câble flexible sont agencées de manière qu'elles soient sensiblement enroulées autour du montant latéral (2) respectif, le trajet de l'enroulement passant sur la face avant du montant (2) respectif.

11. Dossier selon une quelconque des revendications précédentes, caractérisé en ce que, pour la fixation et la réaction des moyens de réglage (9-11), l'élément d'appui (1) possède des formations arrière (4) du type ferrure sur lesquelles sont montées des formations (8) ayant la forme générale d'un L avec au moins un trou (11) pour le passage des moyens de réglage.
